# EUROPEAN PATENT APPLICATION

(11) **EP 4 574 004 A1**
(43) Date of publication of application: **25.06.2025**
(21) Application number: 24219795.2
(22) Date of filing: 13.12.2024
(51) Int. Cl.: A47L 15/42, D06F 39/08

(54) **ANTI-FLOODING SAFETY DEVICE FOR A HOUSEHOLD APPLIANCE IN PARTICULAR FOR A WASHING MACHINE, AND PRODUCTION METHOD THEREOF**

(30) Priority: 22.12.2023 IT 202300027939
(71) Applicant: TP Reflex Group S.p.A., 21040 Venegono Superiore (VA) (IT)
(72) Inventor: MORO, Simone, 22020 Faloppio (CO) (IT); ROTTA, Andrea, 22070 Appiano Gentile (CO) (IT)
(74) Representative: Metroconsult Srl

(57) **Abstract**

The present invention relates to an anti-flooding safety device (1) for a household appliance, said device (1) comprising a valve body (10) and a supply pipe (21) for supplying a liquid into the household appliance, wherein a duct (10C) is defined in said valve body (21) for the passage of said liquid, said valve body (10) comprising:
- an inlet section (11) for connecting the anti-flooding device (1) to a liquid supply source;
- an outlet section (12) for connecting the anti-flooding device (1) to the supply pipe (21);
- an intermediate section (13), which comprises a passage (13P) allowing the liquid to flow from said inlet section (11) to said outlet section (12) within the duct (10C);
- at least one shut-off device (14) comprising a closing element (14A) movably arranged in said intermediate section (13) to selectively open or close said passage (13P),
wherein said device (1) comprises a connection element (30) configured to ensure the coupling between the outlet section (12) of the valve body (10) and a terminal portion (21T) of the supply pipe (21), wherein said connection element (30) is irremovably associated with said terminal portion (21T) of the supply pipe (21).

The peculiar feature of the present invention lies in the fact that the outlet section (12) of the valve body (10) comprises a seat (12A) in fluidic communication with the duct (10C) defined in the valve body (10), said seat (12A) being configured to house at least a portion of the connection element (30), wherein the device (1) comprises a clamping element (40) movably coupled to an intermediate portion (21I) of the supply pipe (21) and configured to stably connect to the outlet section (12) of the valve body (10) to retain and/or clamp said at least one portion of the connection element (30) within the seat (12A).

## Description

The present invention relates to an anti-flooding safety device for a household appliance, in particular for a washing machine, according to the preamble of claim 1.

The present invention also relates to arelated method for the production (in particular, in terms of manufacturing and assembling) of an anti-flooding safety device for a household appliance, in particular for a washing machine.

Such a device, also known as "aquastop" in the industry, is generally used in household appliances like dishwashers and laundry washing machines, but may find application in any household appliance that needs to be supplied with a liquid from a supply source, in particular water from the water supply network, such as refrigerators equipped with a built-in ice-cube generator/distributor.

Indeed, supplying a liquid to such household appliances implies the risk of leaks due, for example, to broken supply pipes or malfunctioning internal devices (pumps, valves, filters, etc.) of the household appliance itself, resulting in potential flooding. Consequently, the household appliances known in the art include anti-flooding safety devices for continuously monitoring and checking the presence of any leaks in the washing machine, in particular during the wash liquid supply and drain phases.

The anti-flooding safety devices known in the art comprise a valve body in which a passage duct for a liquid is defined, said valve body comprising:
- an inlet section for connecting the device to a liquid supply source;
- an outlet section for connecting the device to a supply pipe supplying said liquid into a washing machine, wherein a second pipe surrounds the water supply pipe, forming a gap in between;
- an intermediate section comprising a passage for the liquid and connecting said inlet section to said outlet section;
- at least one shut-off device (which may consist of a mechanical valve or a solenoid valve) comprising a closing or shutting element movably arranged in said intermediate section to open and/or close said passage (thus either allowing the liquid to circulate, when the passage is opened, or preventing the liquid from circulating, when the passage is closed).

In substance the devices known in the art comprise an internal pipe (i.e. the water supply pipe) that extends longitudinally within the second pipe, so that a liquid collection chamber is defined between them.

In this context, the first pipe (i.e. the internal one, that is to say, the water supply pipe) may be:
- of the smooth surface type, e.g. made of polyvinyl chloride (PVC) or polyethylene (LDPE; HDPE), with the possible addition of other materials or reinforcement fibers, wherein the inner and outer surfaces of said first pipe are substantially smooth and straight,
- of the so-called "corrugated" type, made of polypropylene or polyethylene, wherein the wall or section of said first pipe is defined by a number of protrusions and recesses, preferably annular and parallel to one another and arranged in a regular series (but said protrusions and recesses may also have a spiral design).

Usually, whether the first pipe is a smooth one or a corrugated one, the second pipe (i.e. the external one) is preferably a so-called "corrugated" pipe made of polypropylene or polyethylene, thus having good flexibility properties. The difference in flexibility between the internal pipe and the external pipe may cause anomalous bending or throttling in the less flexible first pipe, resulting in a risk of failure that should be eliminated or anyway reduced.

In the anti-flooding safety devices known in the art, which comprise a smooth first pipe, the latter is typically fitted onto said outlet section of the valve body, wherein said outlet section comprises retaining teeth or annular projections that ensure a proper coupling with the inner portion of the supply pipe; in this context, the anti-flooding safety device comprises a locking component, in particular a mechanical one (e.g. consisting of a metallic clamping bushing), which is locally deformable to clamp the supply pipe onto the outlet section of the valve body.

However, those anti-flooding safety devices where the coupling between the first supply pipe and the outlet section of the valve body is obtained by said deforming operation of the locking component or metal bushing (which operation is known in the art as "crimping") suffer from a number of drawbacks.

As a matter of fact, the hydraulic sealing of the coupling between the first supply pipe and the outlet section of the valve body is strongly dependent on the quality of the crimping operations, since improper or incorrect crimping will inevitably affect such hydraulic sealing, resulting in the risk of undesired leakage of liquid.

In this context, the crimping operation may lead to tears and/or defects suffered by the components involved in said operation, in particular caused by mechanical crushing of such components during the crimping operation.

A further drawback of such a solution lies in the fact that the crimping operations always and inevitably make the steps of assembling the components of the anti-flooding safety device more complex, resulting in higher costs incurred for manufacturing said device. The above-described solution also requires a significantly larger amount of material for manufacturing the device (in particular, more material is required for making the outlet section of the valve body and the valve-side terminal section of the first supply pipe) and results in a heavier device, in particular because of the use of a metal bushing.

An attempt towards an improved solution has been made in document EP1798326A1, which describes a possible solution which is particularly suited to the case wherein the first and second pipes of the anti-flooding safety device are both corrugated, so that they have good flexibility properties and their corrugated surfaces adheres well to the material of the junction elements provided at the pipe ends.

Such junction elements, also referred to as "nozzles" by those skilled in the art, are usually made of rubber: in the solution described in EP1798326A1, such rubber can be moulded over the ribs and the recesses that are typically found in corrugated pipes, since rubber can be easily anchored to the corrugated surface of the pipes.

Unlike the prior art, the use of two corrugated pipes eliminates the risk of undesired breaking or throttling, but a few drawbacks still remain.

In the first place, the flow of a liquid within a corrugated supply pipe (i.e. the internal pipe) is a source of undesired noise in household appliances, which noise can be hardly eliminated.

Secondly, the corrugations on the inner wall of a corrugated pipe cause load losses in the liquid, mainly because of increased friction and formation of vortices that slow down the flow.

In addition to the above characteristics of a corrugated pipe, it also suffers from wall thickness limitations due to the production process required (extrusion and blow moulding), resulting in limited ability of a corrugated pipe to withstand high pressures and/or temperatures.

Finally, all other conditions being equal, a corrugated pipe must have a larger outside diameter than a smooth pipe, resulting in increased space occupation.

In this frame, it is the main object of the present invention to provide an anti-flooding safety device for a household appliance, in particular for a washing machine, so conceived as to overcome the drawbacks of prior-art solutions, and which can also be implemented when the first supply pipe is a smooth one.

In particular, it is one object of the present invention to provide an anti-flooding safety device for a household appliance, in particular for a washing machine, wherein the coupling between the first supply pipe and the outlet section of the valve body does not require the execution of a "crimping" operation, thus not being affected by the problems that the latter implies.

In this context, it is one object of the present invention to provide an anti-flooding safety device that ensures optimal hydraulic sealing of the coupling between the first supply pipe, even in solutions using a smooth pipe, and the outlet section of the valve body, and that will not cause the components involved in such coupling to suffer any tear and/or defect.

It is another object of the present invention to provide an anti-flooding safety device conceived to facilitate the steps of assembling its components, resulting in lower costs incurred for manufacturing said device.

It is a further object of the present invention to provide an anti-flooding safety device that requires less material for manufacturing the device, in particular less material for making the outlet section of the valve body and the terminal portion of the first supply pipe, so that the whole device is lighter.

Further objects, features and advantages of the present invention will become apparent in light of the following detailed description and of the annexed drawings, which are provided herein merely by way of non-limiting explanatory example, wherein:
- Fig. 1a is a perspective view of an anti-flooding safety device for a household appliance, in particular for a washing machine, according to the present invention;
- Fig. 1b shows a partially exploded perspective view of the anti-flooding safety device according to the present invention;
- Fig. 2a is a side view of the anti-flooding safety device according to the present invention, wherein a portion of said device is shown in a cross-sectional view;
- Fig. 2b is a partially exploded side view of the device shown in Fig. 2a;
- Fig. 3b shows a perspective view of a portion of the anti-flooding safety device according to the present invention;

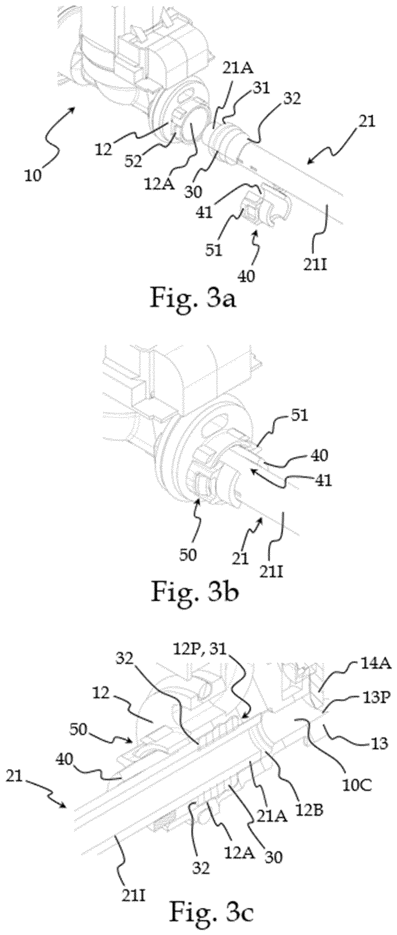

- Fig. 3b shows a perspective view of a detail of the anti-flooding safety device according to the present invention;
- Fig. 3c shows a sectional perspective view of a detail of the anti-flooding safety device according to the present invention.

Referring now to the annexed drawings, reference numeral 1 designates as a whole an anti-flooding safety device for a household appliance, in particular for a washing machine, according to the present invention.

Said household appliance may be a washing machine (such as a laundry washing machine, a washing/drying machine, a clothes dryer, a dishwasher, and so forth), or a refrigerator (e.g. comprising a built-in ice-cube generator/distributor); it should be noted that said household appliance is not shown in the accompanying figures.

The anti-flooding device 1 comprises a valve body (designated as a whole by reference numeral 10) and a supply pipe 21 for supplying a liquid into the household appliance, wherein a duct (only a section of which, designated as 10C, is shown in Fig. 3c) is defined in said valve body 10 for the passage of said liquid.

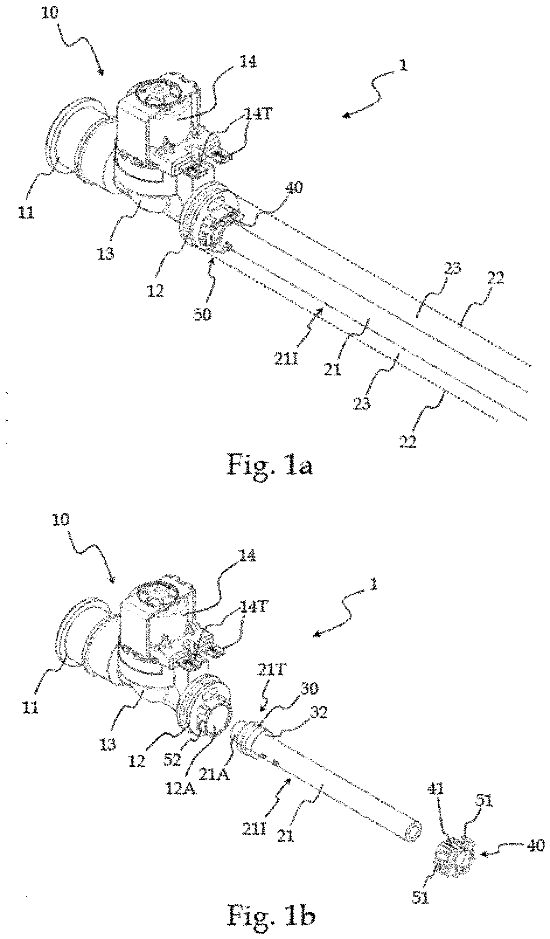

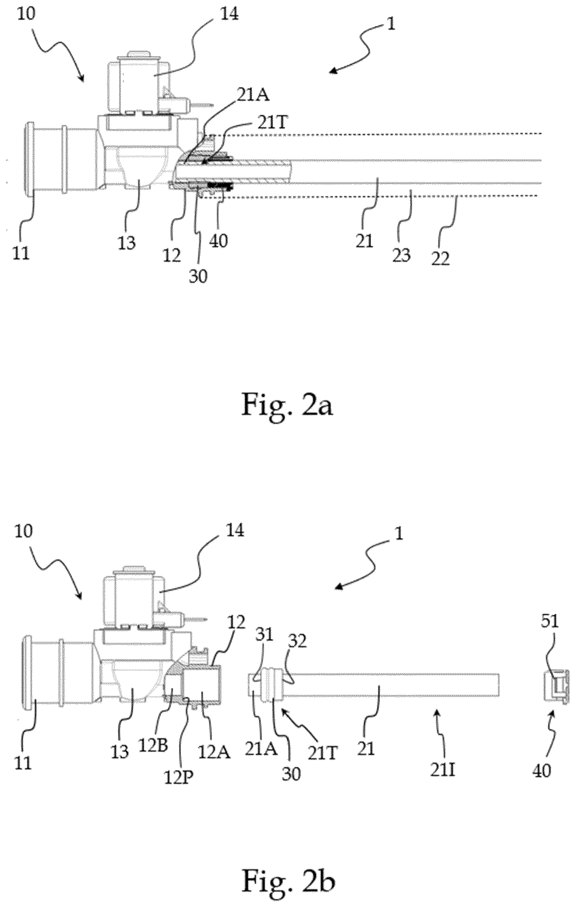

Preferably, the device 1 comprises a second pipe 22 (drawn with dashed lines in Figures 1a and 2a to highlight the supply pipe 21, which can also be referred to as "first pipe 21"), wherein the supply pipe 21 extends longitudinally within the second pipe 22, so that a gap 23 for liquid collection is defined between the supply pipe 21 and the second pipe 22.

As is known in the art, said gap 23 is adapted to conduct and/or retain any liquid leaking from the supply pipe 21; moreover, the supply pipe 21 and the second pipe 22 are both flexible and impermeable to the liquid. In this context, the supply pipe 21 is adapted to conduct the liquid into the household appliance, since it can be connected to a downstream filler neck (not shown in the drawings, being per se known and unnecessary to understand the present invention) leading into the household appliance.

According to an embodiment of the invention (like the one shown in the annexed drawings), the supply pipe 21 has substantially smooth inner and outer surfaces; in particular, said supply pipe 21 is made of polyolefin material, preferably polyethylene, in particular low-density polyethylene (LDPE) or high-density polyethylene (HDPE). However, it should be noted that the teachings of the present invention are also applicable to the case wherein the supply pipe 21 is a corrugated pipe, i.e. a pipe having a corrugated wall.

Furthermore, the second pipe 22 is preferably of the corrugated type, i.e. a pipe having a corrugated wall. Basically, the outer surface (and optionally also the inner surface) of said second pipe 22 is defined by a series of protrusions and recesses.

In particular, the valve body 10 comprises:
- an inlet section 11 for connecting the anti-flooding device 1 to a liquid supply source;
- an outlet section 12 for connecting the anti-flooding device 1 to the supply pipe 21;
- an intermediate section 13, which comprises a passage (designated as 13P in Fig. 3c) allowing the liquid to flow from said inlet section 11 to said outlet section 12 within the duct 10C (basically, the duct 10C comprises said passage 13P);
- at least one shut-off device 14 comprising a shutting element (designated as 14A in Fig. 3c) movably arranged in said intermediate section 13 to selectively open or close said passage 13P (thus either allowing the liquid to circulate, when the passage 13P is opened, or preventing the liquid from circulating, when the passage 13P is closed).

It should be noted that said inlet section 11, outlet section 12 and intermediate section 13 comprise each a respective part of the duct 10C defined in the valve body 21, wherein said duct 10C is in fluidic communication with said supply pipe 21 once the valve body 10 and the supply pipe 21 have been mutually associated.

In this context, said at least one shut-off device 14 comprises, in a per se known manner, at least one valve configured to close of the passage 13P for the liquid in the event of any malfunction of devices of the household appliance and/or of a leak of liquid from the supply pipe 21; the valves employed for this purpose are typically electrically operated (like the solenoid valve shown by way of non-limiting example in the accompanying drawings), or mechanically or pneumatically operated, and are associated with sensor means, which may be electronic, electromechanical (e.g. based on the use of a float and a microswitch) or essentially mechanical ones (e.g. based on the use of an element that expands when it comes in contact with a liquid).

In the simplified embodiment shown in the annexed drawings, the device 1 comprises an electric cable (not shown) that extends through the gap 23, wherein the conductors of the electric cable are connected, at a first end thereof, to terminals 14T of the shut-off device 14, in particular comprising a solenoid valve; the second end of the electric cable may be equipped with respective conductors to be connected to a control system of the device 1 or of the interlocked household appliance.

Preferably, the valve body 10 comprises a ring nut (not shown in the drawings) mounted in the region of the inlet section 11 for coupling the device 1 to a liquid supply source, e.g. a tap (not shown); within the inlet section 11 of the device 1 a filter and/or a flow regulator may be installed (not shown in the annexed drawings).

In accordance with the present invention, the device 1 comprises a connection element 30 configured to ensure the coupling between the outlet section 12 of the valve body 10 and a terminal portion (designated as 21T in the annexed drawings)) of the supply pipe 21, wherein said connection element 30 is irremovably associated with said terminal portion 21T of the supply pipe 21.

In particular, said connection element 30 has a substantially annular shape and an inside diameter substantially equal to the outside diameter of the supply pipe 21.

Preferably, said connection element 30 is formed by moulding, in particular by injection moulding, over the outer surface of the supply pipe 21 and in correspondence of said terminal portion 21T of the supply pipe 21. In this context, the connection element 30 is made from a polymeric material chemically compatible with the low-density or ultra-low-density polyethylene that the supply pipe 21 is made of, preferably said polymeric material being a thermoplastic elastomer, in particular a styrene block copolymer. Thus, through the use of the above-described production methods, the low-density polyethylene of the supply pipe 21 and the thermoplastic elastomer of the connection element 30 are made to adhere to each other, thereby forming mutual chemical and/or physical bonds.

It should however be noted that said connection element 30 may also be moulded jointly with said terminal portion 21T of the supply pipe 21, so that the inner surface of the connection element 30 and the outer surface of the supply pipe 21 are indistinguishable from each other. Alternatively, the connection element 30 and the supply pipe 21 may be intimately joined together by adhesion or welding of their respective constituent materials, which should be of types mutually compatible for this very purpose. As a further alternative, the connection element 30 may be formed from a material that shrinks when heated, such as a thermosetting material, or after being subjected to thermal or mechanical stress, such as a shape-memory material.

Once it has been irremovably associated with the terminal portion 21T of the supply pipe 21, the connection element 30 is adapted to couple the supply pipe 21 to the valve body 10, particularly to the outlet section 12 of said valve body 10.

In accordance with the present invention, the outlet section 12 of the valve body 10 comprises a seat 12A in fluidic communication with the duct 10C defined in the valve body 10, said seat 12A being configured to house at least a portion of the connection element 30.

In particular, said seat 12A is substantially complementary, in terms of dimensions and shape, to said at least a portion of the connection element 30. In this context, the seat 12A has internal dimensions that substantially match the external dimensions of the connection element 30; preferably, said seat 12A is configured to completely house the connection element 30 (as clearly shown in the annexed Figures 2a and 3c).

In a preferred embodiment, said connection element 30 is irremovably associated with said terminal portion 21T of the supply pipe 21 in such a way that an end portion 21A (which is, for example, a few centimeters long) of said supply pipe 21 remains clear or uncovered; note that, in such an embodiment, the term "end portion 21A" refers to a part of the supply pipe 21 which is positioned upstream of the "terminal portion 21T" with which the connection element 30 is associated.

In this embodiment, the outlet section 12 of the valve body 10 comprises a second seat 12B in fluidic communication with the duct 10C defined in the valve body 10 and with the seat 12A (which can be referred to as "first seat 12A"), wherein said second seat 12B is configured to house said end portion 21A of the supply pipe 21 (as clearly shown in Figures 2b and 3c, where the first seat 12A houses substantially the whole connection element 30). In this context, it is apparent that said first seat 12A and second seat 12B are essentially parts of the liquid passage duct 10C defined in the valve body 10, in particular the second seat 12B being positioned upstream of the first seat 12A.

It should nevertheless be noted that the connection element 30 may alternatively be directly associated with the end portion 21A, i.e. in such a way as to cover said end portion 21A of the supply pipe 21; in such an embodiment, not shown in the accompanying drawings, and wherein the "terminal portion 21T" of the supply pipe 21 substantially corresponds to the "end portion 21A", said connection element 30 is therefore associated with the supply pipe 21 without substantially leaving uncovered or clearing any part of the end of the supply pipe 21.

In both of these embodiments (i.e. both when the connection element 30 is associated with the supply pipe 21 in such a way as to leave an end portion 21A clear or uncovered and when the connection element 30 is associated with the supply pipe 21 in such a way as to cover the end portion 21A, which therefore substantially corresponds to the terminal portion 21T of the supply pipe 21), the connection element 30 is preferably housed in the seat 12A in a manner such that a first edge 31 of the connection element 30 abuts (as shown in Fig. 3c) against a back wall 12P of the seat 12A. In particular, in the case wherein the connection element 30 is associated with the supply pipe 21 in such a way as to leave the end portion 21A uncovered, the second seat 12B extends from said back wall 12P towards the intermediate section 13 of the valve body 10; as a consequence, the back wall 12P is essentially an external front edge of the second seat 12B.

In accordance with the present invention, the device 1 comprises a clamping element (designated as a whole by reference numeral 40 in the annexed drawings) movably coupled to an intermediate portion 21I of the supply pipe 21 and configured to be stably connected (i.e. fastened or coupled) to the outlet section 12 of the valve body 10 in order to retain and/or clamp said at least a portion of the connection element 30 within the seat 12A. In this regard, it should be noted that said intermediate portion 21I is a portion of the supply pipe 21 that is positioned downstream of the connection element 30, i.e. between the connection element 30 and an interlocked household appliance.

In particular, the clamping element 40 is made as one piece configured to be movably fitted onto said intermediate portion 21I of the supply pipe 21, wherein said clamping element 40 is further configured to be moved along said intermediate portion 21I to be stably connected (e.g. engaged, as will be explained hereafter) to the outlet section 12 of the valve body 10.

As shown in the accompanying figures, said clamping element 40 has a substantially annular or tubular shape, and comprises a cut-out 41 developing longitudinally in the clamping element 40 (as shown in Figures 1b, 3a and 3b), wherein said clamping element 40 is locally and temporarily deformable (e.g. said clamping element 40 being at least partly made of elastic material) to allow the intermediate portion 21I of the supply pipe 21 to pass through said cut-out 41 and to allow the clamping element 40 to be fitted onto said intermediate portion 21I. In substance, the clamping element 40 is temporarily deformed to expand the cut-out 41 and allow the intermediate portion 21I of the supply pipe 21 to pass through it, and then returns into its original configuration, embracing said intermediate portion 21I of the supply pipe 21 (without the intermediate portion 21I being allowed to pass through the cut-out 41, since the clamping element 40 has elastically returned into its original condition, such that the cut-out 41 is no longer expanded and prevents the intermediate portion 21I from passing through said cut-out 41).

Preferably, the clamping element 40 and the outlet section 12 of the valve body 10 comprise connection means (designated as a whole by reference numeral 50 in Figures 1a and 3b) so configured as to stably and mutually couple said clamping element 40 and said outlet section 12.

In the embodiment shown in the annexed drawings, said connection means 50 comprise at least one slot 51 formed on said clamping element 40 and at least one tooth 52 formed on the outlet section 12 of the valve body 10, in particular said at least one tooth 52 being formed on the outer surface of the outlet section 12, and said at least one slot 51 being formed in such a way as to deform elastically to engage said at least one tooth 52 (such that a stable and mutual coupling is obtained between said clamping element 40 and said outlet section 12).

It is however clear that the connection means 50 may also be implemented otherwise. For example, said at least one slot 51 may be formed on the outlet section 12, and said at least one tooth 52 may be formed on the clamping element 40; in addition, said connection means 50 may comprise components that are different from those shown in the accompanying figures (e.g. they may comprise snap-type coupling means known in the art, or respective threads adapted to join said components, and so forth). Furthermore, said clamping element 40 comprises at least one surface configured to be positioned in abutment with the connection element 30, in particular in abutment with a second edge 32 of the connection element 30 when said clamping element 40 is stably connected to the outlet section 12 of the valve body 10; as is particularly visible in Fig. 2a, the seat 12A of the outlet section 12 is configured to internally house the connection element 30 and also at least a portion of the clamping element 40 (i.e. at least that portion of the clamping element 30 which is in abutment with the second edge 32 of the connection element 30).

In substance, these provisions allow to obtain a mechanical interference between the clamping element 40 and the connection element 30 to keep the connection element 40 and the terminal portion 21T of the supply pipe 21 constrained to the outlet section 12 of the valve body 10.

As clearly shown in Fig. 3c, the connection element 30 is preferably positioned within the seat 12A in such a way that it is enclosed (substantially "packed") between the back wall 12P (since the first edge 31 of the connection element 30 is in abutment with said back wall 12P), the inner wall of the seat 12A, and the clamping element 40 (since the second edge 32 of the connection element 30 is in abutment with said clamping element 40).

It is therefore apparent that the connection element 30 makes it possible to obtain an adequate mechanical coupling between the supply pipe 21 and the valve body 10 (said mechanical coupling being obtained through co-operation between said connection element 30 and said clamping element 40), as well as a proper hydraulic seal between the outlet section 12 of the valve body 10 and the supply pipe 21 (in particular, said connection element 30 being enclosed between the back wall 12P and the inner wall of the seat 12A).

In accordance with an alternative embodiment (not shown in the annexed drawings), the clamping element 40 comprises at least one first element and one second element, separate from each other and configured to be mutually and stably joined as they are positioned on an intermediate portion 21I of the supply pipe 21.

In this context, said first element and second element comprise fastening means configured to fasten them together; by way of example, said fastening means may comprise a pin provided on either one of said first and second elements, adapted to be inserted and secured into at least one respective recess provided on the other one of said first and second elements. It is however clear that said fastening means may also be implemented otherwise.

In accordance with one embodiment (not shown in the annexed drawings), the clamping element 40 and the outlet section 12 of the valve body 10 may comprise guiding means configured to allow the clamping element 40 to be positioned correctly relative to said outlet section 12. For example, said guiding means may comprise at least one protrusion of the clamping element 40 and at least one slot of the outlet section 12 of the valve body 10, wherein said at least one protrusion is configured to fit into said at least one slot; it is however apparent that said guiding means may also be implemented otherwise, for example said at least one protrusion being formed on the outlet section 12 of the valve body 10, and said slot being formed on the clamping element 40.

The following will describe a method for the production (i.e. for manufacturing and assembling) of an anti-flooding device 1 according to the present invention, said anti-flooding device 1 comprising a valve body 10 and a supply pipe 21, wherein said valve body 21 is defined in a duct 10C in fluidic communication with said supply pipe 21, in particular for supplying a liquid into a household appliance, wherein the valve body 10 comprises:
- an inlet section 11 for connecting the anti-flooding device 1 to a liquid supply source;
- an outlet section 12 for connecting the anti-flooding device 1 to the supply pipe 21;
- an intermediate section 13, which comprises a passage 13P allowing the liquid to flow from said inlet section 11 to said outlet section 12 within the duct 10C (basically, the duct 10C comprises said passage 13P);
- at least one shut-off device 14 comprising a shutting element 14A movably arranged in said intermediate section 13 to selectively open or close said passage 13P.

The method according to the present invention comprises the following steps:
a) irremovably associating a connection element 30 with a terminal portion 21T of the supply pipe 21;
b) coupling a clamping element 40 to an intermediate portion 21I of the supply pipe 21, in particular the coupling between the clamping element 40 and the supply pipe 21 being such that said clamping element 40 can be moved along said intermediate portion 21I;
c) inserting or housing at least a portion of the connection element 30 into a seat 12A of the outlet section 12 of the valve body 10;
d) moving said clamping element 40 along the intermediate portion 21I of the supply pipe 21 to connect it stably to the outlet section 12 of the valve body 10, wherein the stable connection between the clamping element 40 and the outlet section 12 is effected in such a way as to retain and/or clamp said at least a portion of the connection element 30 (and, consequently, also the terminal portion 21T of the supply pipe 21, which is irremovably associated with the connection element 30) within the seat 12A.

With reference to steps a) and b), it should be noted that they can be indifferently executed in such a way that step a) precedes step b), or in such a way that step a) occurs substantially simultaneously with step b), or in such a way that step b) precedes step a). Said step d) is preferably carried out by engaging the clamping element 40 and the outlet section 12 of the valve body 10 with each other, in particular through connection means 50 comprising at least one slot 51 formed on said clamping element 40 and at least one tooth 52 formed on the outlet section 12 of the valve body 10, and wherein said at least one slot 51 is so realized as to elastically deform in order to engage said at least one tooth 52.

Furthermore, said step d) can be carried out by a mutual engagement of guiding means that may be provided on the clamping element 40 and on the outlet section 12 of the valve body 10, so as to allow the clamping element 40 to be positioned correctly relative to the outlet section 12 of the valve body 10. For example, said mutual engagement may be effected by inserting at least one protrusion of the clamping element 40 into at least one cut-out of the outlet section 12 of the valve body 10 (or vice versa, i.e. by inserting at least one protrusion of the outlet section 12 into at least one slot of the clamping element 40).

Preferably, said step c) is carried out in such a way that a first edge 31 of the connection element 30 is positioned in abutment (as shown in Fig. 3c) with a back wall 12P of the seat 12A.

In particular, said step c) is carried out in such a way that the connection element 30 is entirely positioned within the seat 12A and enclosed (substantially "packed") between the back wall 12P, the inner wall of the seat 12A, and the clamping element 40. Furthermore, said step c) can be carried out in such a way that an end portion 21A of the supply pipe 21 is inserted into a second seat 12B of the outlet section 12 of the valve body 10. In this context, step d) is carried out in such a way that the stable connection between the clamping element 40 and the outlet section 12 of the valve body 10 is effected in a manner such as to retain said end portion 21A within said second seat 12B. As far as step b) is concerned, it is preferably carried out by locally and temporarily deforming the clamping element 40 in such a way as to allow the intermediate portion 21I of the supply pipe 21 to pass through a cut-out 41 developing longitudinally in the clamping element 40, so as to fit the clamping element 40 onto said intermediate portion 21I.

Alternatively, said step b) may be carried out through the following sub-steps:
- positioning at least one first element and at least one second element (separate from each other) onto said intermediate portion 21I of the supply pipe 21,
- mutually and stably joining said at least one first element and at least one second element in order to obtain the clamping element 40, in particular the joining of said at least one first element and at least one second element being achieved by mutually engaging fastening means of said at least one first element and at least one second element.

Preferably, step a) is carried out by moulding the connection element 30 over the outer surface of the supply pipe 21 and in correspondence of a terminal portion 21T of the supply pipe 21.

Alternatively, said step a) may be carried out by:
- jointly moulding the connection element 30 and the terminal portion 21T of the supply pipe 21;
- intimately joining the connection element 30 and the supply pipe 21 by gluing or welding the respective constituent materials;
- subjecting to thermal stress a thermosetting material of the connection element 30;
- stopping the application of a thermal or mechanical stress to a shape-memory material of the connection element 30.

The advantages of the present invention are apparent from the above description.

In particular, the peculiar provisions of the present invention make it possible to overcome the drawbacks of prior-art solutions, and particularly of anti-flooding devices implementing a step of "crimping" a metallic clamping bushing, which can be locally deformed to clamp the supply pipe onto the outlet section of the valve body.

Indeed, the provision of the connection element 30 and of the clamping element 40 makes it possible to avoid the need to execute a "crimping" operation, while at the same time ensuring both an adequate mechanical coupling between the supply pipe 21 and the valve body 10 and a proper hydraulic seal between the outlet section 12 of the valve body 10 and the supply pipe 21.

Another advantage of the device 1 according to the present invention lies in the fact that it has been so conceived as to prevent the components involved in the coupling between the supply pipe 21 and the valve body 10 from being affected by tears and/or defects, in particular said tears or defects being typically undesired consequences of the "crimping" operations.

The peculiar provisions of the connection element 30 and of the clamping element 40 also facilitate the steps of assembling the device 1 according to the present invention, resulting in lower costs incurred for manufacturing said device 1.

In addition, the connection element 30 and the clamping element 40 make it possible to manufacture the device 1 by using much less material for making the outlet section 12 of the valve body 10 and the terminal portion 21T of the first supply pipe 21, resulting in the device 1 being lighter.

The device 1 described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described device 1, but may be subject to many modifications, improvements or replacements of equivalent parts and elements without departing from the inventive idea, as clearly specified in the following claims.

## Claims

1. An anti-flooding safety device (1) for a household appliance, said device (1) comprising a valve body (10) and a supply pipe (21) for supplying a liquid into the household appliance, wherein a duct (10C) is defined in said valve body (10) for the passage of said liquid, said valve body (10) comprising:
- an inlet section (11) for connecting the anti-flooding device (1) to a liquid supply source;
- an outlet section (12) for connecting the anti-flooding device (1) to the supply pipe (21);
- an intermediate section (13), which comprises a passage (13P) allowing the liquid to flow from said inlet section (11) to said outlet section (12) within the duct (10C);
- at least one shut-off device (14) comprising a shutting element (14A) movably arranged in said intermediate section (13) to selectively open or close said passage (13P),
wherein said device (1) comprises a connection element (30) configured to ensure the coupling between the outlet section (12) of the valve body (10) and a terminal portion (21T) of the supply pipe (21), wherein said connection element (30) is irremovably associated with said terminal portion (21T) of the supply pipe (21),
said device (1) being **characterized in that**
the outlet section (12) of the valve body (10) comprises a seat (12A) in fluidic communication with the duct (10C) defined in the valve body (10), said seat (12A) being configured to house at least a portion of the connection element (30), wherein the device (1) comprises a clamping element (40) movably coupled to an intermediate portion (21I) of the supply pipe (21) and configured to be stably connected to the outlet section (12) of the valve body (10) in order to retain and/or clamp said at least one portion of the connection element (30) within the seat (12A).

2. Device (1) according to claim 1, **characterized in that** said clamping element (40) is made as one piece configured to be movably fitted onto an intermediate portion (21I) of the supply pipe (21), wherein said clamping element (40) is configured to be moved along said intermediate portion (21I) to be stably connected to the outlet section (12) of the valve body (10).

3. Device (1) according to one or more of the preceding claims, **characterized in that** said clamping element (40) has a substantially annular or tubular shape and comprises a cut-out (41) developing longitudinally in the clamping element (40), wherein said clamping element (40) is locally and temporarily deformable to allow the intermediate portion (211) of the supply pipe (21) to pass through said cut-out (41) and to allow the clamping element (40) to be fitted onto said intermediate portion (21I).

4. Device (1) according to claim 1, **characterized in that** the clamping element (40) comprises at least one first element and one second element separate from each other and configured to be stably joined together after having been positioned on an intermediate portion (21I) of the supply pipe (21), in particular said at least one first element and second element comprising fastening means configured to allow them to be mutually joined.

5. Device (1) according to one or more of the preceding claims, **characterized in that** the clamping element (40) and the outlet section (12) of the valve body (10) comprise connection means (50) configured to stably and mutually couple said clamping element (40) and said outlet section (12), in particular said connection means (50) comprising at least one slot (51) formed on said clamping element (40) and at least one respective tooth (52) formed on said outlet section (12).

6. Device (1) according to one or more of the preceding claims, **characterized in that** the clamping element (40) and the outlet section (12) of the valve body (10) comprise guiding means configured to allow the clamping element (40) to be positioned correctly relative to said outlet section (12).

7. Device (1) according to one or more of the preceding claims, **characterized in that** said connection element (30) is formed by moulding, in particular by injection moulding, over the outer surface of the supply pipe (21) and in correspondence of said terminal portion (21T) of the supply pipe (21).

8. Device (1) according to one or more of the preceding claims, **characterized in that** said connection element (30) is irremovably associated with said terminal portion (21T) of the supply pipe (21) in such a way that an end portion (21A) of said supply pipe (21) remains clear or uncovered, wherein the outlet section (12) of the valve body (10) comprises a second seat (12B) in fluidic communication with the duct (10C) defined in the valve body (10) and with the seat (12A), and wherein said second seat (12B) is configured to house said end portion (21A) of the supply pipe (21).

9. Device (1) according to one or more of the preceding claims, **characterized in that** said connection element (30) is housed in the seat (12A) in such a way that a first edge (31) of the connection element (30) abuts against a back wall (12P) of the seat (12A).

10. Device (1) according to one or more of the preceding claims, **characterized in that** said clamping element (40) comprises at least one surface configured to be positioned in abutment with the connection element (30) when said clamping element (40) is stably connected to the outlet section (12) of the valve body (10), in particular in abutment with a second edge (32) of the connection element (30).

11. Method for the production of a device (1) according to one or more of the preceding claims, **characterized in that** it comprises the following steps:
a) irremovably associating a connection element (30) with a terminal portion (21T) of the supply pipe (21);
b) coupling a clamping element (40) to an intermediate portion (21I) of the supply pipe (21), in particular the coupling between the clamping element (40) and the supply pipe (21) being such that said clamping element (40) can be moved along said intermediate portion (21I);
c) inserting or housing at least a portion of the connection element (30) into a seat (12A) of the outlet section (12) of the valve body (10);
d) moving said clamping element (40) along the intermediate portion (21I) of the supply pipe (21) to connect it stably to the outlet section (12) of the valve body (10), wherein the stable connection between the clamping element (40) and the outlet section (12) is effected in such a way as to retain and/or clamp said at least a portion of the connection element (30) and the terminal portion (21T) of the supply pipe (21) within the seat (12A).

12. Method according to claim 11, **characterized in that** said step d) is carried out by engaging the clamping element (40) and the outlet section (12) of the valve body (10) with each other through connection means (50), in particular comprising at least one slot (51) formed on said clamping element (40) and at least one tooth (52) formed on the outlet section (12) of the valve body (10), and wherein said at least one slot (51) is so realized as to elastically deform in order to engage said at least one tooth (52).

13. Method according to one or more of claims 11 and 12, **characterized in that** said step b) is carried out by locally and temporarily deforming the clamping element (40) in such a way as to allow the intermediate portion (21I) of the supply pipe (21) to pass through a cut-out (41) developing longitudinally in the clamping element (40), so as to fit the clamping element (40) onto said intermediate portion (211).

14. Method according to one or more of claims 11 and 12, **characterized in that** said step b) is carried out by means of the following sub-steps:
- positioning at least one first element and at least one second element onto said intermediate portion (21I) of the supply pipe (21),
- mutually and stably joining said at least one first element and at least one second element in order to obtain the clamping element (40), in particular the joining of said at least one first element and at least one second element being achieved by mutually engaging fastening means of said at least one first element and at least one second element.

15. Method according to one or more of claims 11 to 14, **characterized in that** said step a) is carried out by moulding the connection element (30) over the outer surface of the supply pipe (21) and in correspondence of a terminal portion (21T) of the supply pipe (21).
